# EUROPEAN PATENT APPLICATION

(11) **EP 3 719 087 A1**
(43) Date of publication of application: **07.10.2020**
(21) Application number: 18882896.6
(22) Date of filing: 27.11.2018
(51) Int. Cl.: C09D 201/06, B32B 27/30, C09D 5/02, C09D 129/04, C09D 133/08

(54) **COATING LIQUID FOR FORMING GAS BARRIER LAYER**

(30) Priority: 29.11.2017 JP 2017229397
(71) Applicant: Sumitomo Chemical Company, Limited, Tokyo 104-8260 (JP)
(72) Inventor: OOSAKI, Nobuhiro, Tokyo 104-8260 (JP); MIURA, Makiko, Tokyo 104-8260 (JP); SHIBATA, Daisuke, Osaka-shi Osaka 554-8558 (JP)
(74) Representative: Vossius & Partner Patentanwälte Rechtsanwälte mbB
(86) International application number: PCT/JP2018/043464
(87) International publication number: WO 2019/107321

(57) **Abstract**

The present invention provides a coating fluid for forming a gas barrier layer, the coating fluid including; a liquid medium containing water; and a resin having at least one type of functional group selected from the group consisting of a hydroxy group, a carboxy group, an amino group, and a sulfo group, in which an average particle size of the resin is 100 to 600 nm.

## Description

### TECHNICAL FIELD

The present invention relates to a coating fluid for forming a gas barrier layer. Herein, the "gas barrier layer" means a layer used for suppressing permeation of gas (for example, oxygen).

### BACKGROUND ART

For example, packaging materials for foods and cosmetics or the like require low oxygen permeability in order to prevent oxidization thereof. A laminate including a gas barrier layer made of polyvinyl alcohol or the derivative thereof, the gas barrier layer being formed on a substrate, has been known as a packaging material with low oxygen permeability. For example, Patent Documents 1 and 2 describe, as a gas barrier layer, a film containing polyvinyl alcohol and poly(meth) acrylic acid.

### PRIOR ART DOCUMENTS

### PATENT DOCUMENTS

Patent Document 1: JP-A-6-220221
Patent Document 2: JP-A-2004-18650

### SUMMARY OF THE INVENTION

### PROBLEMS TO BE SOLVED BY THE INVENTION

A gas barrier layer formed using polyvinyl alcohol exhibits low oxygen permeability under low humidity, but has a problem that oxygen permeability increases under high humidity. The present invention is conceived focusing on such a problem, and an object of the present invention is to provide a coating fluid capable of forming a gas barrier layer exhibiting low oxygen permeability under high humidity.

### MEANS FOR SOLVING THE PROBLEMS

The present invention that can achieve the above-described object is as follows.
[1] A coating fluid for forming a gas barrier layer, the coating fluid including; a liquid medium containing water; and a resin having at least one type of functional group selected from the group consisting of a hydroxy group, a carboxy group, an amino group, and a sulfo group, in which an average particle size of the resin is 100 to 600 nm.
[2] The coating fluid according to [1] above, in which the liquid medium further contains a liquid organic medium.
[3] The coating fluid according to [2] above, in which the liquid organic medium is at least one selected from the group consisting of monovalent alcohol, glycol, dimethylformamide, dimethyl sulfoxide, and acetone.
[4] The coating fluid according to [3] above, in which the monovalent alcohol is at least one selected from the group consisting of methanol, ethanol, propanol, isopropanol, and butanol.
[5] The coating fluid according to [1] above, in which the liquid medium contains water and monovalent alcohol.
[6] The coating fluid according to [1] above, in which the liquid medium is composed of water and monovalent alcohol.
[7] The coating fluid according to [5] or [6] above, in which the monovalent alcohol is at least one selected from the group consisting of ethanol and isopropanol.
[8] The coating fluid according to [5] or [6] above, in which the monovalent alcohol is isopropanol.
[9] The coating fluid according to any one of [5] to [8] above, in which a content of the monovalent alcohol is 1 to 50% by mass per 100% by mass of the total of water and monovalent alcohol.
[10] The coating fluid according to any one of [5] to [8] above, in which a content of the monovalent alcohol is 5 to 50% by mass per 100% by mass of the total of water and monovalent alcohol.
[11] The coating fluid according to any one of [5] to [8] above, in which a content of the monovalent alcohol is 10 to 50% by mass per 100% by mass of the total of water and monovalent alcohol.
[12] The coating fluid according to any one of [1] to [11] above, in which a content of the liquid medium is 80 to 99.9% by mass per 100% by mass of the coating fluid.
[13] The coating fluid according to any one of [1] to [12] above, in which a content of the resin is 0.1 to 20% by mass per 100% by mass of the coating fluid.
[14] The coating fluid according to any one of [1] to [11] above, in which a content of the liquid medium is 85 to 99.5% by mass per 100% by mass of the coating fluid.
[15] The coating fluid according to any one of [1] to [11], and [14] above, in which a content of the resin is 0.5 to 15 % by mass per 100% by mass of the coating fluid.
[16] The coating fluid according to any one of [1] to [11] above, in which a content of the liquid medium is 90 to 99% by mass per 100% by mass of the coating fluid.
[17] The coating fluid according to any one of [1] to [11], and [16] above, in which a content of the resin is 1 to 10% by mass per 100% by mass of the coating fluid.
[18] The coating fluid according to any one of [1] to [17] above, in which the resin contains polyvinyl alcohol.
[19] The coating fluid according to [18] above, in which an average polymerization degree of the polyvinyl alcohol is 800 to 3,000.
[20] The coating fluid according to [18] above, in which an average polymerization degree of the polyvinyl alcohol is 900 to 2,500.
[21] The coating fluid according to [18] above, in which an average polymerization degree of the polyvinyl alcohol is 1,000 to 2,000.
[22] The coating fluid according to [18] above, in which a weight average molecular weight of the polyvinyl alcohol is 100,000 to 500,000.
[23] The coating fluid according to [18] above, in which a weight average molecular weight of the polyvinyl alcohol is 150,000 to 400,000.
[24] The coating fluid according to [18] above, in which a weight average molecular weight of the polyvinyl alcohol is 170,000 to 300,000.
[25] The coating fluid according to any one of [18] to [24] above, in which a degree of saponification of the polyvinyl alcohol is 80 to 100%.
[26] The coating fluid according to any one of [18] to [24] above, in which a degree of saponification of the polyvinyl alcohol is 90 to 100%.
[27] The coating fluid according to any one of [18] to [24] above, in which a degree of saponification of the polyvinyl alcohol is 95 to 100%.
[28] The coating fluid according to any one of [18] to [27] above, in which a content of the polyvinyl alcohol is 0.05 to 10% by mass per 100% by mass of the coating fluid.
[29] The coating fluid according to any one of [18] to [27] above, in which a content of the polyvinyl alcohol is 0.3 to 8% by mass per 100% by mass of the coating fluid.
[30] The coating fluid according to any one of [18] to [27] above, in which a content of the polyvinyl alcohol is 0.7 to 6% by mass per 100% by mass of the coating fluid.
[31] The coating fluid according to any one of [1] to [30] above, in which the resin contains polyacrylic acid.
[32] The coating fluid according to [31] above, in which a weight average molecular weight of the polyacrylic acid is 200,000 to 5,000,000.
[33] The coating fluid according to [31] above, in which a weight average molecular weight of the polyacrylic acid is 300,000 to 3,000,000.
[34] The coating fluid according to [31] above, in which a weight average molecular weight of the polyacrylic acid is 400,000 to 2,000,000.
[35] The coating fluid according to any one of [31] to [34] above, in which a content of the polyacrylic acid is 0.05 to 10% by mass per 100% by mass of the coating fluid.
[36] The coating fluid according to any one of [31] to [34] above, in which a content of the polyacrylic acid is 0.42 to 7% by mass per 100% by mass of the coating fluid.
[37] The coating fluid according to any one of [31] to [34] above, in which a content of the polyacrylic acid is 0.3 to 4% by mass per 100% by mass of the coating fluid.
[38] The coating fluid according to any one of [18] to [37] above, in which the resin is composed of polyvinyl alcohol and polyacrylic acid.
[39] The coating fluid according to any one of [1] to [38] above, in which an average particle size of the resin is 110 nm or more.
[40] The coating fluid according to any one of [1] to [38] above, in which an average particle size of the resin is 120 nm or more.
[41] The coating fluid according to any one of [1] to [40] above, in which an average particle size of the resin is 550 nm or less.
[42] The coating fluid according to any one of [1] to [40] above, in which an average particle size of the resin is 500 nm or less.
[43] The coating fluid according to any one of [1] to [40] above, in which an average particle size of the resin is 400 nm or less.
[44] A coating film formed from the coating fluid according to any one of [1] to [43] above, in which the coating film is used as a gas barrier layer.
[45] The coating film according to [44] above, in which a thickness of the coating film after drying is 0.01 to 20 µm.
[46] The coating film according to [44] above, in which a thickness of the coating film after drying is 0.05 to 10 µm.
[47] A laminate including: a substrate; and the coating film according to any one of [44] to [46] above formed on the substrate.
[48] A molded article obtained by further molding the laminate according to [47] above.

### EFFECT OF THE INVENTION

According to the coating fluid of the present invention, a gas barrier layer (coating film) that exhibits low oxygen permeability under high humidity can be formed.

### MODE FOR CARRYING OUT THE INVENTION

Hereinafter, respective components that can be used in the present invention, or the like will be described in order. Note that examples and preferred descriptions and the like described later can be combined as long as there are no mutual inconsistencies.

### <Liquid medium>

The liquid medium used in the present invention contains water. The liquid medium may be composed of water, or may contain a liquid organic medium in addition to water. Herein, the "liquid medium" means a medium that is liquid at 25°C and 1 atm, and the "liquid organic medium" means an organic compound that is liquid at 25°C and 1 atm. One type of liquid organic medium may be used alone, or two or more types thereof may be used.

Examples of the liquid organic medium include monovalent alcohol, glycol, dimethylformamide, dimethyl sulfoxide, and acetone. Examples of the monovalent alcohol include methanol, ethanol, propanol, isopropanol, and butanol.

The liquid medium preferably contains water and monovalent alcohol, and is more preferably composed of water and monovalent alcohol. From the viewpoint of stability of the coating fluid and drying time in application of the coating film, the content of the monovalent alcohol in the liquid medium is preferably 1 to 50% by mass, more preferably 5 to 50% by mass, and even more preferably 10 to 50% by mass per 100% by mass of the total of water and monovalent alcohol. In this aspect, the monovalent alcohol is preferably at least one selected from the group consisting of ethanol and isopropanol, and is more preferably isopropanol.

From the viewpoint of low oxygen permeability and film formability, the content of the liquid medium is preferably 80 to 99.9% by mass, more preferably 85 to 99.5% by mass, and even more preferably 90 to 99% by mass per 100% by mass of the coating fluid.

### <Resin>

The coating fluid of the present invention contains a resin having at least one type of functional group selected from the group consisting of a hydroxy group, a carboxy group, an amino group, and a sulfo group (hereinafter, abbreviated as functional resin). The amino group may be non-substituted or substituted with an alkyl group, and the like. Further, the carboxy group, the amino group, and the sulfo group may also be each in the form of a salt.

The functional resin may be a homopolymer or a copolymer. The copolymer may be any of a block copolymer, an alternating copolymer, a random copolymer, and a combination thereof.

Examples of the resin having at least one type of functional group selected from the group consisting of a hydroxy group, a carboxy group, and an amino group include polyvinyl alcohol (PVA), a vinylamine-vinylalcohol copolymer, a (meth)acrylic acid-vinyl alcohol copolymer, an ethylene-vinyl alcohol copolymer (EVOH), polyacrylic acid, polymethacrylic acid, polysaccharides, and the derivative thereof. Examples of the resin having a sulfo group include a derivative or the like obtained by substituting a hydroxy group of a resin having a hydroxy group, such as polyvinyl alcohol, with a sulfo group.

From the viewpoint of low oxygen permeability and film formability, the content of the functional resin is preferably 0.1 to 20% by mass, more preferably 0.5 to 15% by mass, and even more preferably 1 to 10% by mass per 100% by mass of the coating fluid.

The functional resin preferably contains polyvinyl alcohol. From the viewpoint of low oxygen permeability and durability of the film, the average polymerization degree of the polyvinyl alcohol is preferably 800 to 3,000, more preferably 900 to 2,500, and even more preferably 1,000 to 2,000. Further, from the viewpoint of low oxygen permeability and film formability, the degree of saponification of the polyvinyl alcohol is preferably 80 to 100%, more preferably 90 to 100%, and even more preferably 95 to 100%. The average polymerization degree and the degree of saponification of polyvinyl alcohol can be measured in accordance with JIS K 6726:1994.

From the viewpoint of low oxygen permeability and durability of the film, the weight average molecular weight of the polyvinyl alcohol is preferably 100,000 to 500,000, more preferably 150,000 to 400,000, and even more preferably 170,000 to 300,000. The weight average molecular weight can be measured by gel permeation chromatography (GPC).

When the polyvinyl alcohol is used, the content of the polyvinyl alcohol is preferably 0.05 to 10% by mass, more preferably 0.3 to 8% by mass, and even more preferably 0.7 to 6% by mass per 100% by mass of the coating fluid, from the viewpoint of low oxygen permeability, film formability, and adhesion to the substrate.

The functional resin preferably contains polyacrylic acid. From the viewpoint of low oxygen permeability and film formability, the weight average molecular weight of the polyacrylic acid is preferably 200,000 to 5,000,000, more preferably 300,000 to 3,000,000, and even more preferably 400,000 to 2,000,000. The weight average molecular weight can be measured by gel permeation chromatography (GPC).

When the polyacrylic acid is used, the content of the polyacrylic acid is preferably 0.05 to 10% by mass, more preferably 0.2 to 7% by mass, and even more preferably 0.3 to 4% by mass per 100% by mass of the coating fluid, from the viewpoint of low oxygen permeability and water resistant of the coating film.

The functional resin more preferably contains polyvinyl alcohol and polyacrylic acid, and is even more preferably composed of polyvinyl alcohol and polyacrylic acid. In this aspect, the degree of saponification, the average polymerization degree, the weight average molecular weight, and the content of polyvinyl alcohol, and the weight average molecular weight and the content of polyacrylic acid are as described above.

One of the features of the coating fluid of the present invention lies in that the average particle size of the functional resin is 100 to 600 nm. A gas barrier layer (coating film) that has low oxygen permeability under high humidity as well as low humidity can be formed by using a coating fluid containing such a functional resin, as shown in Examples described later.

The average particle size of the functional resin is a value measured as follows. Frist, a coating fluid is diluted with water to prepare a diluent having a solid concentration of 0.1 to 0.01% by mass, and this is used as a measurement sample. Here, the solid concentration means the concentration of components (functional resin and later-described other components optionally used) other than the liquid medium (water, or water and a liquid organic medium) in the diluent. Next, the harmonic mean particle size based on the scattered light intensity of the functional resin in the diluent at 24°C is measured based on JIS Z8828:2013 using a particle size analyzer according to dynamic light scattering, and the obtained value is used as the average particle size of the functional resin in the present invention.

From the viewpoint of low oxygen permeability and durability of the film, the average particle size of the functional resin is preferably 110 nm or more, and more preferably 120 nm or more. Further, from the viewpoint of low oxygen permeability and transparency of the film, the average particle size of the functional resin is preferably 550 nm or less, more preferably 500 nm or less, and particularly preferably 400 nm or less.

### <Other components>

The coating fluid of the present invention may contain other components that are different from the liquid medium and the resin in a range that does not significantly inhibit the effect of the present invention (low oxygen permeability under high humidity). Examples of the other components include an inorganic layered compound, a chelate compound, and a surfactant. One type of other component may be used alone, or two or more types thereof may be used.

An example of the inorganic layered compound is a clay mineral. One type of clay mineral may be used alone, or two or more types thereof may be used. Examples of the clay mineral include kaolinite, dickite, nakhlite, halloysite, antigorite, chrysotile, pyrophyllite, montmorillonite, beidellite, nontronite, saponite, sauconite, stevensite, hectorite, tetrasililic mica, sodium taeniolite, muscovite, margarite, talc, vermiculite, phlogopite, xanthophyllite, chlorite, and hydrotalcite. The clay mineral may be one whose dispersibility or the like is improved by a treatment (for example, treatment with an organic substance, and ion exchange).

The inorganic layered compound is preferably a smectite clay mineral. One type of smectite clay mineral may be used alone, or two or more types thereof may be used. Examples of the smectite clay mineral include montmorillonite, beidellite, nontronite, saponite, sauconite, stevensite, and hectorite. The inorganic layered compound is more preferably montmorillonite. The smectite clay mineral (in particular, montmorillonite) may be one whose dispersibility or the like is improved by a treatment (for example, treatment with an organic substance, and ion exchange).

The average particle size of the inorganic layered compound in the coating fluid is preferably 0.02 to 3 µm, more preferably 0.1 to 2 µm, and even more preferably 0.2 to 1 µm. Herein, the "average particle size of the inorganic layered compound in the coating fluid" means a median size on the basis of the volume of the inorganic layered compound in the coating fluid measured using a laser diffraction-scattering type particle size analyzer (for example, "LA 910" available from Horiba, Ltd.).

The ratio (L/a) of the average particle size L of the inorganic layered compound in the coating fluid described above to the thickness a of the unit crystal layer of the inorganic layered compound, which can be measured by powder X-ray diffraction method, is preferably 20 to 3,000, more preferably 100 to 2,000, and even more preferably 200 to 1,000. Note that the inorganic layered compound means an inorganic compound having a layered crystal structure, and the thickness a of the unit crystal layer of the inorganic layered compound means the thickness of one layer of the crystal structure.

When the inorganic layered compound is used, the content of the inorganic layered compound is preferably 0.047 to 5% by mass, more preferably 0.05 to 4.5% by mass, and even more preferably 0.1 to 4.4% by mass per 100% by mass of the coating fluid, from the viewpoint of low oxygen permeability and flexibility of the film.

When the coating fluid of the present invention contains an inorganic layered compound, the above-described measurement method of the average particle size is performed using the coating fluid. In a case where the average particle size of the inorganic layered compound and the average particle size of the functional resin can be distinguished, the measurement value of the latter is used as the average particle size of the functional resin in the present invention. Meanwhile, in a case where the average particle size of the inorganic layered compound and the average particle size of the functional resin cannot be distinguished by the above-described measurement method of the average particle size, a coating fluid from which the inorganic layered compound has been removed is prepared by a treatment such as filtration of the coating fluid, and then the above-described measurement method of the average particle size is performed using the coating fluid. The obtained measurement value is used as the average particle size of the functional resin in the present invention.

### <Production of coating fluid>

The coating fluid of the present invention, in which the average particle size of the functional resin is 100 to 600 nm, can be produced by performing high-pressure dispersion treatment. In high-pressure dispersion treatment, functional resin is normally microparticulated by passing a mixture containing functional resin and a liquid medium through a capillary tube or between slits formed in a chamber of a high-pressure dispersing apparatus at high speed and utilizing a shearing-pulverizing action or a cavitation action.

The average particle size of the functional resin can be set to a predetermined range of the present invention by using a high-pressure dispersing apparatus including a single nozzle chamber (for example, "Star Burst" available from Sugino Machine Limited), a high-pressure dispersing apparatus including a chamber having breaker rings (for example, "Homogenizer" available from Sanwa Engineering Ltd.), or a high-pressure dispersing apparatus including a chamber having a valve body (for example, "Homogenizer" available from Japan Tetra Pak) The pressure for high-pressure dispersion treatment is preferably 50 to 150 MPa. The number of times of high-pressure dispersion treatment is preferably two or more, and normally five or less.

### <Coating film and laminate>

A laminate (substrate/coating film) can be produced by applying the coating fluid of the present invention on a substrate and drying the applied coating fluid to form a coating film (gas barrier layer). Thus, the present invention provides not only the coating fluid but also the coating film used as a gas barrier layer and a laminate including a substrate and the coating film formed on the substrate.

The laminate may have a coating film formed from the coating fluid of the present invention on only one surface thereof, or may have the coating films on both surfaces thereof. To enhance adhesion between the coating film formed from the coating fluid of the present invention and the substrate, the surface of the substrate on which the coating fluid is applied may be subjected to a surface treatment such as corona treatment, ozone treatment, electron beam treatment, and application of an anchor coating agent.

Examples of the material for the substrate include thermoplastic resins, thermosetting resins, photocurable resins, paper, wood, and metals. Among these, thermoplastic resins are preferred. Examples of the thermoplastic resin include: olefin resins such as low density polyethylene, high density polyethylene, straight-chain low density polyethylene, an ethylene-propylene copolymer, an ethylene-butene copolymer, an ethylene-hexene copolymer, an ethylene-octene copolymer, polypropylene, poly-4-methyl pentene-1, cyclic olefin resin, an ethylene-vinyl acetate copolymer, an ethylene-methyl methacrylate copolymer, and ionomer resin; ester resins such as polyethylene terephthalate, polybutylene terephthalate, and polyethylene naphthalate; amide resins such as polyamide 6 (another name: Nylon (registered trademark) 6), polyamide 66 (another name: Nylon (registered trademark) 66), metaxylenediamine-adipic acid polycondensate, and polymethyl methacrylimide; acrylic resins such as polymethyl methacrylate; styrene resins such as polystyrene, a styrene-acrylonitrile copolymer, and a styrene-acrylonitrile-butadiene copolymer; polyacrylonitrile; cellulose resins such as cellulose triacetate, and cellulose diacetate; halogen-containing resins such as polyvinyl chloride, polyvinylidene chloride, and polyvinylidene fluoride; vinyl alcohol resins such as polyvinyl alcohol, and an ethylene-vinyl alcohol copolymer; and engineering plastics such as polycarbonate, polysulfone, polyethersulfone, polyetheretherketone, polyphenylene oxide, and polymethylene oxide.

In the present invention, the shape of the substrate is not particularly limited. Examples of the shape of the substrate include a woven fabric, a non-woven fabric, a sheet, a film, and a foam. The substrate may be a composite material. An example of the substrate of the composite material is one in which at least one selected from the group consisting of aluminium, alumina, and silica is deposited on resin.

When a thermoplastic resin film is used as the substrate, the production method of the film is not particularly limited. Examples of the film production method include extrusion, casting, a calendering method, uniaxial stretching, and biaxial stretching. The thickness of the substrate is preferably 1 to 1,000 µm, and more preferably 5 to 800 µm.

The application method of the coating fluid is not particularly limited, and a publicly known method can be used. Examples of the application method include: a gravure method such as a direct gravure method, a reverse gravure method, and a micro gravure method; a roll coating method such as a double roll beat coating method, and a bottom-feed triple reverse coating method; a doctor knife method; a die coating method; a bar coating method; a dipping method; a spray coating method; a curtain coating method; a spin coating method; a flexo-coating method; a screen coating method; a coating method that uses a brush or the like.

The drying method of the coating fluid that has been applied is not particularly limited, and a publicly known method can be used. Examples of drying include heat drying, drying by non-heating means such as decompression, and drying by a combination thereof. Among these, heat drying is preferably employed from the viewpoint of simplicity of an apparatus. Examples of the apparatus used for heat drying include a drying furnace, a heating roll, an infrared ray heating apparatus, and a microwave heating apparatus. The temperature for heat drying is preferably 40 to 150°C, and more preferably 50 to 140°C. The drying time is preferably 0.01 to 1,440 minutes, and more preferably 0.01 to 60 minutes.

The thickness (thickness after drying) of the coating film formed from the coating fluid of the present invention is preferably 0.01 to 20 µm, and more preferably 0.05 to 10 µm.

In the laminate, other layer may be formed on the coating film formed from the coating fluid of the present invention. Further, in the laminate, other layer may also be formed on a surface in which the coating film formed from the coating fluid of the present invention is not formed. Examples of the other layer include a heat seal layer, and the like. Examples of resin constituting the heat seal layer include olefin resins such as low density polyethylene, high density polyethylene, straight-chain low density polyethylene, an ethylene-propylene copolymer, an ethylene-butene copolymer, an ethylene-hexene copolymer, an ethylene-4-methyl-1-pentene copolymer, an ethylene-octene copolymer, polypropylene, an ethylene-vinyl acetate copolymer, an ethylene-methyl methacrylate copolymer, an ethylene-methyl acrylate copolymer, an ethylene-acrylic acid copolymer, and ionomer resin. To enhance adhesion between the heat seal layer and the substrate, the surface of the substrate on which the heat seal layer is formed may be subjected to a surface treatment such as corona treatment, ozone treatment, electron beam treatment, and application of an anchor coating agent.

### <Molded article>

The present invention provides a molded article obtained by further molding the laminate. Examples of the molding include blow molding, vacuum molding, pressure molding, and vacuum/pressure molding as described in, for example, JP-A-8-238667, JP-A-5-220913, JP-A-54-90265, JP-A-61-108542, JP-A-2006-137058, JP-A-2003-53823, JP-A-2-69213, JP-A-3-176128, JP-A-5-104572, JP-A-61-249750, and JP-A-61-244737. Examples of the molded article obtained include a bottle, a bottle cap, a carton container, a cup, a dish, a tray, a press through package, a tank, a tube, and a syringe.

### EXAMPLES

The present invention will hereinafter be described more specifically with reference to Examples, but the present invention is not limited to the following Examples. The present invention can be of course put into practice after appropriate modifications or variations within a range meeting the gist described above and below, all of which are included in the technical scope of the present invention.

### 1. Raw material

Raw materials used in Examples, and the like and the abbreviations thereof will be described below.

### (1) Resin

### (a) Polyvinyl alcohol (PVA)

(PVA) (1) (polyvinyl alcohol, "RS 2117" available from Kuraray Co., Ltd., weight average molecular weight: 190,000, degree of saponification: 99.6%, average polymerization degree: 1,700)
(PVA) (2) (polyvinyl alcohol, "Poval 105" available from Kuraray Co., Ltd., weight average molecular weight: 65,000, degree of saponification: 98.5%, average polymerization degree: 500)
(PVA) (3) (polyvinyl alcohol, "UMR-10HH" available from Unitika Chemical Co., Ltd., weight average molecular weight: 25,000, degree of saponification: 98.9%, average polymerization degree: 240)

### (b) Polyacrylic acid (PAA)

PAA (1) (polyacrylic acid, available from Wako Pure Chemical Industries, Ltd., weight average molecular weight: 1,000,000)
PAA (2) (polyacrylic acid, available from Wako Pure Chemical Industries, Ltd., weight average molecular weight: 150,000)
PAA (3) (polyacrylic acid, available from Wako Pure Chemical Industries, Ltd., weight average molecular weight: 25,000)

### (2) Liquid medium

Ion exchanged water (specific electric conductance: 0.7 µs/cm or less)
Isopropanol

### 2. High-pressure dispersing apparatus

High-pressure dispersing apparatuses used in Examples, and the like and the abbreviations thereof will be described below.
High-pressure dispersing apparatus (1) ("Star Burst" available from Sugino Machine Limited, a high-pressure dispersing apparatus including a single nozzle chamber)
High-pressure dispersing apparatus (2) ("Homogenizer model H 100" available from Sanwa Engineering Co. Ltd., a high-pressure dispersing apparatus including a chamber having breaker rings)
High-pressure dispersing apparatus (3) ("Microfluidizer M10-E/H" available from Microfluidics Corporation, a high-pressure dispersing apparatus including an interaction chamber)

### 3. Characteristics evaluation

### (1) Average particle size of resin in coating fluid

A coating fluid described later was diluted with ion exchanged water to prepare a diluent having a solid concentration of 0.1 to 0.0115% by mass, and this was used as a measurement sample. The harmonic mean particle size based on the scattered light intensity of the resin in the diluent at 24°C was measured based on JIS Z8828:2013 using a particle size analyzer ("Nanotrac WaveII-UT151" available from MicrotracBEL Corp.) according to dynamic light scattering, and the obtained value was used as the average particle size of the resin. The results are shown in Table 1.

### (2) Oxygen permeability of laminate

The oxygen permeability of the laminate described later was measured in accordance with JIS K7126-2:2006, using an oxygen permeability tester ("OX-TRAN ML" available from MOCON Inc.) under conditions of 23°C, and 0%RH or 85%RH. The results are shown in Table 1.

### 4. Preparation of coating fluid

### Example 1: Preparation of coating fluid (1)

### (1) Preparation of mixture containing PVA (1)

First, 112.86 g of ion exchanged water and 5.94 g of PVA (1) were charged in a dispersion machine ("DESPER MH-L" available from Asada Iron Works. Co., Ltd.), and then the temperature was raised to 95°C while the obtained mixture was stirred at 1,500 rpm and a peripheral velocity of 4.1 m/min. The mixture was stirred at 95°C, 1,500 rpm, and a peripheral velocity of 4.1 m/min for 30 minutes, and then cooled to 60°C. Thereafter, 212.4 g of isopropanol and 73.26 g of ion exchanged water were added dropwise to the mixture over 5 minutes while the mixture was further stirred at 1,500 rpm and a peripheral velocity of 4.1 m/min. Then, the mixture was cooled to room temperature, thus obtaining 404.46 g of a mixture containing PVA (1).

### (2) Preparation of mixture containing PAA (1)

In another dispersion machine ("DESPER MH-L" available from Asada Iron Works. Co., Ltd.), 48.015 g of ion exchanged water and 1.485 g of PAA (1) were charged, and the obtained mixture was stirred at room temperature, 1,500 rpm and a peripheral velocity of 4.1 m/min to obtain 49.5 g of a mixture containing PAA (1).

### (3) Preparation of mixture containing PVA (1) and PAA (1)

To 404.46 g of the mixture containing PVA (1), obtained as described above in a dispersion machine ("DESPER MH-L" available from Asada Iron Works. Co., Ltd.), 49.5 g of a mixture containing PAA (1) was gradually added while the mixture was stirred at room temperature, 1,500 rpm and a peripheral velocity of 4.1 m/min to obtain approximately 454 g of a mixture containing PVA (1) and PAA (1) .

### (4) High-pressure dispersion treatment and preparation of coating fluid (1)

Approximately 454 g of the mixture containing PVA (1) and PAA (1) was subjected to high-pressure dispersion treatment twice in a single nozzle chamber of the high-pressure dispersing apparatus (1) at a treatment pressure of 150 MPa to obtain a dispersion. Approximately 454 g of the obtained dispersion and 0.83 g of an aqueous solution of sodium hydroxide (concentration: 10% by mass) were mixed, and the obtained mixture was stirred at 23°C, 1,500 rpm, and a peripheral velocity of 4.1 m/min for 5 minutes to obtain a coating fluid (1) (the content of PVA (1): 1.31% by mass, the content of PAA (1): 0.33% by mass, the content of water: 51.65% by mass, the content of isopropanol: 46.7% by mass).

### Example 2: Preparation of coating fluid (2)

### (1) Preparation of mixture containing PVA (1) and PAA (1)

Approximately 454 g of a mixture containing PVA (1) and PAA (1) was obtained in the same manner as in Example 1.

### (2) High-pressure dispersion treatment and preparation of coating fluid (2)

Approximately 454 g of the mixture containing PVA (1) and PAA (1) was subjected to high-pressure dispersion treatment twice by the high-pressure dispersing apparatus (2) at a treatment pressure of 100 MPa to obtain a dispersion.

Approximately 454 g of the obtained dispersion and 0.83 g of an aqueous solution of sodium hydroxide (concentration: 10% by mass) were mixed, and the obtained mixture was stirred at 23°C, 1,500 rpm, and a peripheral velocity of 4.1 m/min for 5 minutes to obtain a coating fluid (2) (the content of PVA (1): 1.31% by mass, the content of PAA (1): 0.33% by mass, the content of water: 51.65% by mass, the content of isopropanol: 46.7% by mass).

### Example 3: Preparation of coating fluid (3)

### (1) Preparation of mixture containing PVA (1) and PAA (1)

Approximately 454 g of a mixture containing PVA (1) and PAA (1) was obtained in the same manner as in Example 1.

### (2) High-pressure dispersion treatment and preparation of coating fluid (3)

Approximately 454 g of the mixture containing PVA (1) and PAA (1) was subjected to high-pressure dispersion treatment twice by the high-pressure dispersing apparatus (2) at a treatment pressure of 50 MPa to obtain a dispersion. Approximately 454 g of the obtained dispersion and 0.83 g of an aqueous solution of sodium hydroxide (concentration: 10% by mass) were mixed, and the obtained mixture was stirred at 23°C, 1,500 rpm, and a peripheral velocity of 4.1 m/min for 5 minutes to obtain a coating fluid (3) (the content of PVA (1): 1.31% by mass, the content of PAA (1): 0.33% by mass, the content of water: 51.65% by mass, the content of isopropanol: 46.7% by mass).

### Comparative Example 1: Preparation of coating fluid (4)

### (1) Preparation of mixture containing PVA (2)

First, 90 g of ion exchanged water and 10 g of PVA (2) were charged in a dispersion machine ("DESPER MH-L" available from Asada Iron Works. Co., Ltd.), and then the temperature was raised to 95°C while the obtained mixture was stirred at 1,500 rpm and a peripheral velocity of 4.1 m/min. The mixture was stirred at 95°C, 1,500 rpm, and a peripheral velocity of 4.1 m/min for 30 minutes, and then cooled to room temperature, thus obtaining 100 g of a mixture containing PVA (2).

### (2) Preparation of mixture containing PAA (2)

In another dispersion machine ("DESPER MH-L" available from Asada Iron Works. Co., Ltd.), 75 g of ion exchanged water and 50 g of a mixture of PAA (2) and ion exchanged water (concentration of PAA (2) available from Wako Pure Chemical Industries, Ltd. in the mixture of PAA (2) and ion exchanged water: 25% by mass) were charged, and the obtained mixture was stirred at room temperature, 1,500 rpm and a peripheral velocity of 4.1 m/min to obtain 125 g of a mixture containing PAA (2).

### (3) Preparation of coating fluid (4)

First, 60 g of the mixture containing PVA (2) and 40 g of the mixture containing PAA (2) obtained as described above were mixed, and the obtained mixture was stirred at 23°C, 1,500 rpm, and a peripheral velocity of 4.1 m/min for 30 minutes to obtain 100 g of a mixture containing PVA (2) and PAA (2). Then, 100 g of the obtained mixture and 0.83 g of an aqueous solution of sodium hydroxide (concentration: 10% by mass) were mixed and stirred at 23°C, 1,500 rpm, and a peripheral velocity of 4.1 m/min for 5 minutes to obtain a coating fluid (4) (the content of PVA (2): 5.95% by mass, the content of PAA (2): 3.97% by mass, the content of water: 90% by mass).

### Comparative Example 2: Preparation of coating fluid (5)

### (1) Preparation of mixture containing PVA (3)

First, 100 g of ion exchanged water and 25 g of PVA (3) were charged in a dispersion machine ("DESPER MH-L" available from Asada Iron Works. Co., Ltd.), and then the temperature was raised to 95°C while the obtained mixture was stirred at 1,500 rpm and a peripheral velocity of 4.1 m/min. The mixture was stirred at 95°C, 1,500 rpm, and a peripheral velocity of 4.1 m/min for 30 minutes, and then cooled to room temperature, thus obtaining 125 g of a mixture containing PVA (3).

### (2) Preparation of mixture containing PAA (3)

In another dispersion machine ("DESPER MH-L" available from Asada Iron Works. Co., Ltd.), 50.67 g of ion exchanged water, 12 g of PAA (3), and 0.67 g of sodium hydroxide were charged, and the obtained mixture was stirred at room temperature, 1,500 rpm and a peripheral velocity of 4.1 m/min to obtain 63.34 g of a mixture containing PAA (3).

### (3) Preparation of coating fluid (5)

21 g of the mixture containing PVA (3) and 51.72 g of the mixture containing PAA (3) obtained as described above were mixed, and the obtained mixture was stirred at 23°C, 1,500 rpm, and a peripheral velocity of 4.1 m/min to obtain a coating fluid (5) (the content of PVA (3): 5.78% by mass, the content of PAA (3): 13.47% by mass, the content of water: 80% by mass).

### Comparative Example 3: Preparation of coating fluid (6)

### (1) Preparation of mixture containing PVA (1) and PAA (1)

Approximately 454 g of a mixture containing PVA (1) and PAA (1) was obtained in the same manner as in Example 1.

### (2) High-pressure dispersion treatment and preparation of coating fluid (6)

Approximately 454 g of the mixture containing PVA (1) and PAA (1) was subjected to high-pressure dispersion treatment once in an interaction chamber of the high-pressure dispersing apparatus (3) at a treatment pressure of 110 MPa to obtain a dispersion. Approximately 454 g of the obtained dispersion and 0.83 g of an aqueous solution of sodium hydroxide (concentration: 10% by mass) were mixed, and the obtained mixture was stirred at 23°C, 1,500 rpm, and a peripheral velocity of 4.1 m/min for 5 minutes to obtain a coating fluid (6) (the content of PVA (1): 1.31 % by mass, the content of PAA (1): 0.33% by mass, the content of water: 51.65% by mass, the content of isopropanol: 46.7% by mass).

### 5. Preparation of coating film and laminate

A biaxially stretched nylon (ONy) film with a thickness of 15 µm ("ON-U" available from Unitika Ltd.), whose one surface has been subjected to corona treatment, was used as the substrate. A laminate (substrate/coating film) was obtained by applying any of coating fluids (1) to (6) obtained in Examples 1 to 3 and Comparative Examples 1 to 3 to the surface of the substrate subjected to corona treatment by a micro gravure method using a test coater available from Yasui Seiki Inc. at a coating speed of 3 m/min, followed by drying using a drying furnace at 100°C for 2 minutes to form a coating film on the substrate.

Note that the coating fluids (1) to (3) and (6) obtained in Examples 1 to 3 and Comparative Example 3 were applied under a condition where the number of lines of the gravure roll: #150 (i.e., 150 grooves per inch); the coating fluid (4) obtained in Comparative Example 1 was applied under a condition where the number of lines of the gravure roll: #250 (i.e., 250 grooves per inch); and the coating fluid (5) obtained in Comparative Example 2 was applied under a condition where the number of lines of the gravure roll: #200 (i.e., 200 grooves per inch).

The thickness (thickness after drying) of the coating film on the substrate was 1 µm in any case. The obtained laminate was allowed to stand under an atmosphere of 23°C and 50%RH for 24 hours, after which the oxygen permeability of the laminate under conditions of 23°C and 0%RH, or 23°C and 80%RH was measured as described above. The results are shown in Table 1. Further, the type and content of resin, and the type of high-pressure dispersing apparatus that were used in Examples 1 to 3 and Comparative Examples 1 to 3, and the average particle size of the resin measured as described above are also shown in Table 1.

**[Table 1]**

| | Type of coating fluid | Resin used | | | | Type of high-pressure dispersing apparatus used | Average particle size of resin (nm) | Oxygen permeability (cc/m²•day•atm) | |
|---|---|---|---|---|---|---|---|---|---|
| | | PVA | | PAA | | | | | |
| | | Type | Content (% by mass) | Type | Content (% by mass) | | | 0% RH | 85% RH |
| Example 1 | (1) | (1) | 1.31 | (1) | 0.33 | (1) | 300 | 0.5 | 8 |
| Example 2 | (2) | (1) | 1.31 | (1) | 0.33 | (2) | 130 | 0.4 | 8 |
| Example 3 | (3) | (1) | 1.31 | (1) | 0.33 | (2) | 520 | 0.6 | 14 |
| Comparative Example 1 | (4) | (2) | 5.95 | (2) | 3.97 | - | 50 | 0.9 | 25 |
| Comparative Example 2 | (5) | (3) | 5.78 | (3) | 13.47 | - | 90 | 3.0 | 40 |
| Comparative Example 3 | (6) | (1) | 1.31 | (1) | 0.33 | (3) | 840 | 0.7 | 19 |

| | | | | | | | | | |
|---|---|---|---|---|---|---|---|---|---|
| PVA = polyvinyl alcohol, PAA = polyacrylic acid | | | | | | | | | |

As shown in the result of Table 1, laminates (substrate/coating film) formed from the coating fluids of Examples 1 to 3, in which the average particle size of resin is 100 to 600 nm, have low oxygen permeability under high humidity (85%RH) compared to laminates formed from the coating fluids of Comparative Examples 1 to 3, in which the requirement of the average particle size is not satisfied.

### INDUSTRIAL APPLICABILITY

A gas barrier layer (coating film) exhibiting low oxygen permeability under high humidity can be formed from the coating fluid of the present invention. A laminate, in which the above-described coating film is formed on a substrate, is useful as packaging materials for foods, cosmetics or the like.

The present application claims priority on JP-2017-229397, and the entire contents of all of which are incorporated herein by reference.

## Claims

1. A coating fluid for forming a gas barrier layer, the coating fluid comprising;
a liquid medium containing water; and
a resin having at least one type of functional group selected from the group consisting of a hydroxy group, a carboxy group, an amino group, and a sulfo group, wherein
an average particle size of the resin is 100 to 600 nm.

2. The coating fluid according to claim 1, wherein the resin contains polyvinyl alcohol.

3. The coating fluid according to claim 2, wherein an average polymerization degree of the polyvinyl alcohol is 800 to 3,000.

4. The coating fluid according to any one of claims 1 to 3, wherein the resin contains polyacrylic acid.

5. The coating fluid according to claim 4, wherein a weight average molecular weight of the polyacrylic acid is 200,000 to 5,000,000.

6. A coating film formed from the coating fluid according to any one of claims 1 to 5, wherein the coating film is used as a gas barrier layer.

7. A laminate comprising:
a substrate; and
the coating film according to claim 6 formed on the substrate.

8. A molded article obtained by further molding the laminate according to claim 7.
